# EUROPÄISCHE PATENTANMELDUNG

(11) **EP 4 814 636 A1**
(43) Veröffentlichungstag der Anmeldung: **30.09.2026**
(21) Anmeldenummer: 26167578.9
(22) Anmeldetag: 25.03.2026
(51) Int. Cl.: G05B 19/418, B25H 1/02, G16H 40/00

(54) **WERKERFÜHRUNGSANLAGE**

(30) Priorität: 26.03.2025 AT 600612025
(71) Anmelder: Motionworx GmbH, 4650 Edt bei Lambach (AT)
(72) Erfinder: Rathner, Bernhard, 4650 Edt bei Lambach (AT); Stelzhammer, Martin, 4631 Krenglbach (AT)
(74) Vertreter: Ellmeyer, Wolfgang

(57) **Zusammenfassung**

Werkerführungsanlage (1) zur projektionsbasierten Werkerführung, umfassend:
+ zumindest eine visuelle Ausgabekomponente (2);
+ zumindest eine Erfassungseinheit (3);
+ Software;
+ zumindest eine Kommunikationsschnittstelle (4); und
+ zumindest eine Recheneinheit (5),
wobei
+ die visuelle Ausgabekomponente (2) ausgebildet ist zur Darstellung von Bildern, grafischen Markierungen, Textinformationen, Videos und/oder Arbeitsanweisungen;
+ die Erfassungseinheit (3) eine Eingabekomponente ist, die ausgebildet ist zur Erfassung von optischen Codes, vorzugsweise QR-Codes, Datamatrix und/oder Barcode, von geometrischen Merkmalen von Objekten, Bildern und/oder Videos;
+ die Software ausgebildet ist zur Zuordnung erfasster Objekte zu gespeicherten Datensätzen, zur Generierung kontextabhängiger Inhalte zur Darstellung, zur Ablaufsteuerung des Arbeitsprozesses und/oder zur Datenerfassung, die über die Erfassungseinheit übermittelt werden;
+ die Kommunikationsschnittstelle (4) ausgebildet ist zur Kommunikation mit externen Datenbanken und anderen Informationsquellen, Management- oder Steuerungssystemen;
+ die Recheneinheit (5) ein Prozessor mit optionalem Datenspeicher ist, der ausgebildet ist für die Verarbeitung der von der Erfassungseinheit erfassten Daten, die Ansteuerung des Darstellungssystems, die Kommunikation mit externen IT-Systemen und/oder die Herstellung von zentralen oder dezentralen Datenmanagementstrukturen, gegebenenfalls betreffend Redundanz bzw. Ausfallsicherheit.

## Beschreibung

In der Produktion ist es immer noch gängig, teilweise Produktionsschritte mit manueller Durchführung durch einen Werker vorzusehen. Insbesondere bei der Herstellung geringer Stückzahlen ist dies weit verbreitet. Um die Qualität abzusichern und die Einarbeitungsaufwände für den Werker zu reduzieren, kommen Werkerführungssysteme zum Einsatz. Heutige Produktionssysteme, in denen eine Werkerführung eingesetzt wird, sind jedoch in der Regel sehr starr und auf eine spezifische Auswahl von Produkten gerichtet. Die Werkerführung wird auf die konkreten Arbeitsabläufe fix programmiert und eingerichtet. Mit zunehmender Variantenvielfalt bei gleichzeitig sinkender Produktlebenszeit ist diese starre Programmierung nachteilig. Insbesondere bei wandlungsfähigen Produktionssystemen kann dies problematisch sein.

Eine spezifische Anwendung der Werkerführung ist beispielsweise in zentralen Aufbereitungseinheiten von medizinischen Produkten (AEMPs) in Krankhäusern oder externen Sterilgutaufbereitungseinrichtungen zu finden. Hier werden Operationsinstrumente jeglicher Art nach ihrer Verwendung im OP in Siebkörben und ungeordnet angeliefert. Nach einer Vorreinigung im "unreinen" Bereich werden die Instrumente in sogenannten Reinigungs- und Desinfektionsgeräten (RDGs) gewaschen. Um einen reibungslosen Ablauf bei Operationen zu gewährleisten, müssen die Instrumente nach dem Reinigungsvorgang in einer genau vorgegebenen Anordnung wieder in Siebkörbe als Operations-Sets einsortiert werden. Jeder Siebkorb wird anhand einer eindeutig vorgegebenen Packliste einsortiert. Jedes Instrument muss dabei direkt, bevor es in den Siebkorb gelegt wird, einzeln und manuell in der Instrumentenmanagementsoftware als "gepackt" abgehakt werden.

Eine weitere Art, um die Instrumente in der richtigen Anordnung einzusortieren, ist das sogenannte "Packen nach Gruppen", bei dem die Instrumente nach ihrer Type (zum Beispiel Venenklemmen in verschiedener Größe oder Pinzetten in unterschiedlichen Ausführungen) vorsortiert und erst zum Schluss gebündelt in den Siebkorb gelegt werden. Auch hier muss jedes Instrument nach der Sichtkontrolle einzeln und manuell vor dem Ablegen im Instrumentenmanagementsystem als "gepackt" abgehakt werden.

Aufgrund der Vielfalt an verschiedenen Operationsinstrumenten passieren bei diesem heiklen Prozess immer wieder Fehler, die zu Verzögerungen im Operationssaal und damit zu fatalen Folgen führen können.

### Stand der Technik

DE202016102142U1 offenbart einen Handarbeitsplatz, insbesondere Fertigungshandarbeitsplatz und/oder Verpackhandarbeitsplatz, umfassend einen für einen Werker zugänglichen Arbeitsbereich, wobei der Handarbeitsplatz zumindest einen Roboterarm aufweist, wobei der Handarbeitsplatz eine Sicherheitseinrichtung aufweist, die derart ausgestaltet ist, dass eine Zusammenarbeit des Roboterarms mit dem Werker im Arbeitsbereich erfolgt.

EP2671680B1 offenbart einen Handarbeitsplatz mit einem Werkzeugsystem, das ein handgeführtes Werkzeug zum Bearbeiten eines Werkstücks aufweist, und einer Werkerführungsvorrichtung, die wenigstens eine Beleuchtungsvorrichtung aufweist, die dafür ausgebildet ist, einen Leuchtfleck auf einem zu bearbeitenden Werkstück zu erzeugen und die Position des Leuchtflecks einzustellen, wobei die Werkerführungsvorrichtung dazu eingerichtet ist, auf dem zu bearbeitenden Werkstück eine Montagestelle durch den Leuchtfleck anzuzeigen.

DE102024001897A1 offenbart ein Werkerassistenzsystem für einen Fertigungsarbeitsplatz für wenigstens einen Werker zur Durchführung wenigstens eines manuellen Arbeitsschrittes, ausgestattet mit wenigstens einem Ausgabegerät, wenigstens einem Sensor sowie einem persistenten Datenspeicher und einer elektronischen Steuereinheit, wobei das wenigstens eine Ausgabegerät dem Werker den nächsten auszuführenden Arbeitsschritt mitteilt, der wenigstens eine Sensor die durch die Ausführung des Arbeitsschritts herbeigeführte Zustandsänderung erfasst, die elektronische Steuereinheit anhand der auf dem persistenten Datenspeicher gespeicherten Daten und der von dem Sensor erfassten Daten einen Soll-IstVergleich durchführt, auf dem Ausgabegerät eine Ausgabe erzeugt und den nächsten auszuführenden Arbeitsschritt anzeigt, wobei die Ausgabe auf dem Ausgabegerät und die Auswahl der Folgeaktion abhängig vom Ergebnis des Soll-Ist-Vergleichs sind.

DE102021208741A1 offenbart ein Verfahren zum Durchführen eines Arbeitsprozesses an einem zu bearbeitenden Werkstück mittels eines mobilen Werkzeuges, das eine Nahfeldkommunikations-Leseeinrichtung aufweist, wobei vor oder bei Beginn des Arbeitsprozesses ein an dem zu bearbeitenden Werkstück oder für den Arbeitsprozess verwendeten Hilfseinrichtung angeordneter Nahfeldkommunikations-Transponder mittels der Nahfeldkommunikations-Leseeinrichtung gelesen wird, wobei mittels einer Steuereinheit des mobilen Werkzeuges basierend auf dem Lesen des Nahfeldkommunikations-Transponders eine Zuordnung des mobilen Werkzeuges zu dem Werkstück und/oder einer Arbeitsstelle an dem Werkstück vorgenommen und ein für das Werkstück oder die Arbeitsstelle vorgesehenes Arbeitsprogramm freigegeben werden, sowie mobilen Werkzeuges und eine Anordnung hiermit.

WO2019201487A1 offenbart eine Werkerführungsanlage zur Führung eines Werkers bei der Durführung eines Prozesses mit einer Prozessanlage, wobei die Prozessanlage mindestens eine Prozesseinrichtung mit Prozesseinrichtungsfähigkeiten aufweist, wobei der Prozess mindestens einen Arbeitsschritt umfasst, mit einer Steuereinrichtung und einer Kommunikationseinrichtung, wobei die Steuereinrichtung ausgebildet ist, die Kommunikationseinrichtung basierend auf Prozessdaten anzusteuern, den durchzuführenden Arbeitsschritt dem Werker zu kommunizieren, wobei der Steuereinrichtung die Prozesseinrichtungsfähigkeiten als Prozesseinrichtungsfähigkeitsdaten bereitgestellt sind, wobei die Prozessdaten die Prozesseinrichtungsfähigkeitsdaten umfassen.

Ziel der Erfindung ist die Bereitstellung einer Werkerführungsanlage, die eine verlässliche Führung eines Werkers bietet und Arbeitsinformationen direkt am Arbeitsplatz automatisiert bereitstellt.

Erfindungsgemäß wird dies dadurch erreicht, indem eine Werkerführungsanlage zur projektionsbasierten Werkerführung bereitgestellt wird, umfassend:
+ zumindest eine visuelle Ausgabekomponente;
+ zumindest eine Erfassungseinheit;
+ Software;
+ zumindest eine Kommunikationsschnittstelle; und
+ zumindest eine Recheneinheit, wobei
+ die visuelle Ausgabekomponente ausgebildet ist zur Darstellung von Bildern, grafischen Markierungen, Textinformationen, Videos und/oder Arbeitsanweisungen;
+ die Erfassungseinheit eine Eingabekomponente ist, die ausgebildet ist zur Erfassung von optischen Codes, vorzugsweise QR-Codes, Datamatrix und/oder Barcode, von geometrischen Merkmalen von Objekten, Bildern und/oder Videos;
+ die Software ausgebildet ist zur Zuordnung erfasster Objekte zu gespeicherten Datensätzen, zur Generierung kontextabhängiger Inhalte zur Darstellung, zur Ablaufsteuerung des Arbeitsprozesses und/oder zur Datenerfassung, die über die Erfassungseinheit übermittelt werden;
+ die Kommunikationsschnittstelle ausgebildet ist zur Kommunikation mit externen Datenbanken und anderen Informationsquellen, Management- oder Steuerungssystemen;
+ die Recheneinheit ein Prozessor mit optionalem Datenspeicher ist, der ausgebildet ist für die Verarbeitung der von der Erfassungseinheit erfassten Daten, die Ansteuerung des Darstellungssystems, die Kommunikation mit externen IT-Systemen und/oder die Herstellung von zentralen oder dezentralen Datenmanagementstrukturen, gegebenenfalls betreffend Redundanz bzw. Ausfallsicherheit.

Die visuelle Ausgabekomponente ermöglicht eine visuelle, positionsgenaue Darstellung von Arbeitsanweisungen direkt im Arbeitsbereich bzw. Sichtfeld des Werkers.

Die Erfassungseinheit kann eine Eingabekomponenten sein, die zur Identifikation von Werkstücken oder Arbeitsobjekten durch die Erkennung von Codes oder Formen (geometrischen Merkmalen), zum Aufzeichnen von Fotos oder Videos für spätere Software- und/oder KI-Anwendungen verwendet wird.

Die Software kann eine automatisierte, situationsabhängige Erzeugung von Informationen zur Werkerführung ausführen sowie eine Datenerfassung für spätere Software- und/oder KI-Anwendungen ausführen. Beispielsweise kann die Software Vorschläge für Korrekturen und/oder automatische Anpassungen der Arbeitsanweisungen nach Problemen ausführen.

Die Kommunikationsschnittstelle kann eine Integrationskomponente sein. Sie dient zur einfachen Integration in bestehende Systemlandschaften, gegebenenfalls ohne Anpassung externer Software. Sie dient zur Verbindung mit externen Datenbanken oder Produktions-IT-Systemen.

Die Recheneinheit dient zur Verknüpfung von Erfassung, Datenverarbeitung und Darstellung zu einer geschlossenen funktionalen Einheit.

In einer Ausführungsform der Erfindung kann die visuelle Ausgabekomponente ein Projektor sein. Dies ermöglicht ein einfaches Darstellen von Information. Der Projektor kann ein Ultrakurzdistanz-Projektor sein. Andere Beispiele für eine Ausgabekomponente sind beispielsweise eine VR-Brille oder ein optischer Laser, der Informationen in den Sichtbereich des Werkers projiziert. Als andere Ausgabekomponenten kann auch ein Monitor unter der Arbeitsfläche positioniert werden, der die Informationen zur Werkerführung anzeigt.

In einer Ausführungsform der Erfindung kann die Erfassungseinheit ein RFID-Erkennungssystem, ein Handscanner, ein Kamerasensor, eine Fotokamera oder eine Videokamera sein. Solche Systeme sind sehr kosteneffizient.

In einer Ausführungsform der Erfindung kann die Kommunikationsschnittstelle ausgebildet sein als Emulation eines Eingabegeräts . Die Kommunikationsschnittstelle kann ausgebildet sein als Rechenprozessor, der die Emulation eines Eingabegeräts übernimmt. Eine Emulation spart einen physischen Teil und bewirkt eine Kostensenkung.

In einer Ausführungsform der Erfindung kann die Werkerführungsanlage eine Arbeitstischeinheit umfassen, die einen höhenverstellbaren Arbeitstisch mit auskragender Arbeitsfläche (6b) umfasst, wobei
+ ein Bodenbereich unterhalb der Arbeitsfläche zur Gänze frei und ohne Tischbeine bzw. Abstützungen ist;
+ die Arbeitsfläche ausgebildet ist als Darstellung- bzw. Projektionsfläche;
+ eine vertikale oder horizontale Anordnungsmöglichkeit für Instrumente und/oder Werkzeuge in Form von Haken o.Ä. vorhanden ist;
+ gegebenenfalls Ablageelemente, eine Trennwand und/oder zumindest eine Schublade vorhanden sind.

Eine solche Arbeitstischeinheit kann alle notwendigen Vorrichtungen umfassen und stellt eine kompakte Einheit dar, auf der der Werker arbeiten kann.

In einem anderen Aspekt betrifft die Erfindung ein Verfahren zum Durchführen eines Arbeitsprozesses mit Werkerführung, wobei auf einer Werkerführungsanlage,
umfassend:
+ zumindest eine visuelle Ausgabekomponente;
+ zumindest eine Erfassungseinheit;
+ Software;
+ zumindest eine Kommunikationsschnittstelle; und
+ zumindest eine Recheneinheit,
wobei
+ die visuelle Ausgabekomponente ausgebildet ist zur Darstellung von Bildern, grafischen Markierungen, Textinformationen, Videos und/oder Arbeitsanweisungen;
+ die Erfassungseinheit eine Eingabekomponente ist, die ausgebildet ist zur Erfassung von optischen Codes, vorzugsweise QR-Codes, Datamatrix und/oder Barcode, von geometrischen Merkmalen von Objekten, Bildern und/oder Videos;
+ die Software ausgebildet ist zur Zuordnung erfasster Objekte zu gespeicherten Datensätzen, zur Generierung kontextabhängiger Inhalte zur Darstellung, zur Ablaufsteuerung des Arbeitsprozesses und/oder zur Datenerfassung, die über die Erfassungseinheit übermittelt werden;
+ die Kommunikationsschnittstelle ausgebildet ist zur Kommunikation mit externen Datenbanken und anderen Informationsquellen, Management- oder Steuerungssystemen;
+ die Recheneinheit ein Prozessor mit optionalem Datenspeicher ist, der ausgebildet ist für die Verarbeitung der von der Erfassungseinheit erfassten Daten, die Ansteuerung des Darstellungssystems, die Kommunikation mit externen IT-Systemen und/oder die Herstellung von zentralen oder dezentralen Datenmanagementstrukturen, gegebenenfalls betreffend Redundanz bzw. Ausfallsicherheit;
folgende Schritte durchgeführt werden:
i) Darstellung von Informationen durch die visuelle Ausgabekomponente, wodurch der Werker angeleitet wird, die durch die Information dargestellte Aufgabe auszuführen;
ii) Erfassen von Codes durch die Erfassungseinheit;
iii) Ausführen der Software zur Zuordnung erfasster Objekte zu gespeicherten Datensätzen;
iv) Kommunikation mit externen Datenbanken durch die Kommunikationsschnittstelle;
v) Verarbeiten der Daten durch die Recheneinheit;
vi) Darstellung von neuen Informationen durch die visuelle Ausgabekomponente, wodurch der Werker angeleitet wird, die Aufgabe auszuführen.

Durch die Durchführung dieses Verfahrens wird ein Werker effizient durch ein Verfahren geleitet, das eine minimierte Fehlerquote aufweist.

In einer Ausführungsform der Erfindung kann die visuelle Ausgabekomponente ein Projektor sein. Dies ermöglicht ein einfaches Darstellen von Information. Der Projektor kann ein Ultrakurzdistanz-Projektor sein. Andere Beispiele für eine Ausgabekomponente sind beispielsweise eine VR-Brille oder ein optischer Laser, der Informationen in den Sichtbereich des Werkers projiziert. Als andere Ausgabekomponenten kann auch ein Monitor unter der Arbeitsfläche positioniert werden, der die Informationen zur Werkerführung anzeigt.

In einer Ausführungsform der Erfindung kann die Erfassungseinheit ein RFID-Erkennungssystem, ein Handscanner, ein Kamerasensor, eine Fotokamera oder eine Videokamera sein. Solche Systeme sind sehr kosteneffizient.

In einer Ausführungsform der Erfindung kann die Kommunikationsschnittstelle ausgebildet sein als Emulation eines Eingabegeräts. Die Kommunikationsschnittstelle kann ausgebildet sein als Rechenprozessor, der die Emulation eines Eingabegeräts übernimmt. Eine Emulation spart einen physischen Teil und bewirkt eine Kostensenkung.

In einer Ausführungsform der Erfindung kann die Werkerführungsanlage eine Arbeitstischeinheit umfassen, die einen höhenverstellbaren Arbeitstisch mit auskragender Arbeitsfläche (6b) umfasst, wobei
+ ein Bodenbereich unterhalb der Arbeitsfläche zur Gänze frei und ohne Tischbeine bzw. Abstützungen ist;
+ die Arbeitsfläche ausgebildet ist als Darstellung- bzw. Projektionsfläche;
+ eine vertikale oder horizontale Anordnungsmöglichkeit für Instrumente und/oder Werkzeuge in Form von Haken o.Ä. vorhanden ist;
+ gegebenenfalls Ablageelemente, eine Trennwand und/oder zumindest eine Schublade vorhanden sind.

Eine solche Arbeitstischeinheit kann alle notwendigen Vorrichtungen umfassen und stellt eine kompakte Einheit dar, auf der der Werker arbeiten kann.

Offenbart ist ein höhenverstellbarer Arbeitstisch mit integrierter Werkerführung

Offenbart ist ein höhenverstellbarer Arbeitstisch mit integrierter Werkerführung mittels Ultrakurzdistanzprojektor zur Erleichterung und Vereinfachung von komplexen Arbeitsprozessen

Offenbart wird ein höhenverstellbarer Arbeitstisch, der anhand eines Ultrakurzdistanzprojektors jegliche Art von bildlichen Inhalten auf die Tischfläche projiziert.

Insbesondere kann die Projektion von Fotos, Rastern, Punkten oder schriftlichen Hinweisen zur Werkerführung für Montage- oder Packanleitung von Baugruppen bzw. Behältnisinhalten verwendet werden. Da der Projektor über einen Rechenprozessor mit einem Kamerasensor kommuniziert, kann jegliche Art von Inhalt durch das Scannen eines QR-Codes, Datamatrix Codes oder Strichcodes aufgerufen und projiziert werden. Durch die Möglichkeit, Videos auf die Arbeitsfläche zu projizieren, kann der Tisch zum Beispiel auch als Schulungstisch, auf dem man Schulungsvideos vom Ablauf manueller Handlungen darstellt, verwendet werden.

Eine genau auf den Packprozess abgestimmte Werkerführung mit Hilfe des Projektors bedeutet in diesem Fall eine enorme Hilfestellung für neues bzw. weniger qualifiziertes Personal. Da aufgrund der Rückverfolgbarkeit in Zukunft auf jedem Operationsinstrument ein eindeutig zuordenbarer QR-Code, Datamatrix-Code oder Strichcode aufgebracht ist, kann mit Hilfe des Kamerasensors jedes Instrument einzeln durch Scannen im Instrumentenmanagementsystem als "gepackt" abgehakt werden. Nach dem Scannen eines jeden Instruments wird sofort das zugehörige Bild des zu packenden Siebkorbes bzw. Operations-Sets mit der eindeutig sichtbaren Kennzeichnung der genauen Instrumentenposition auf die Tischfläche projiziert.

Beim "Packen nach Gruppen" kann zum Beispiel ein genau definiertes Raster die Bereiche markieren, in den die Gruppen vorsortiert werden. Hier kann beim Scannen eines Instruments der Bereich, in den die Gruppe vorsortiert wird, mit Hilfe des Projektors unmissverständlich deutlich gemacht werden. Ist das letzte Instrument der Gruppe gescannt und abgelegt und die Gruppe somit vollständig vorsortiert, kann der Gruppenbereich durch den Projektor speziell beleuchtet und somit die Freigabe zum Ablegen in den Siebkorb erteilt werden.

Ist das Erkennen des Instrumenten-Codes nicht möglich, erkennt die Kamera anhand der Geometrie, um welches Instrument es sich handelt, und führt das Personal entsprechend durch den Packprozess.

Um Projektor und Kamerasensor autark betreiben zu können, kommunizieren die beiden Komponenten über einen Rechenprozessor und ergeben somit eine geschlossene Einheit. Der Rechenprozessor kann dabei so programmiert werden, dass die Kommunikation über jegliche Art von Schnittstellen umgesetzt werden kann. Zum Beispiel kann das System von einem bestehenden Rechner als handelsüblicher Handscanner erkannt werden. Dies ermöglicht, das System ganz einfach in bestehende Computerumgebungen und Softwarelösungen einbinden zu können.

Die Einheit aus Projektor, Kamerasensor und Rechenprozessor kann somit nicht nur für Tische verwendet werden, sondern ermöglicht den Betrieb auf jeglicher Art von Projektionsflächen wie Wände, Böden, Durchlichtleinwände usw.

Die Datenbank mit dem zu projizierenden Bild- bzw. Videomaterial wird entweder dezentral direkt auf dem Rechenprozessor oder zentral auf einem Server abgelegt. Durch das stetige Synchronisieren mehrerer Rechenprozessoren können bei der dezentralen Lösung die Zugriffszeiten auf die Bild- und Videodaten minimiert werden.

Eine mögliche Verfahrensfolge "Siebkörbe bzw. Sets packen" ist wie folgt:
1. Das Personal holt sich einen oder mehrere unsortierte bzw. chaotisch eingeordnete Siebkörbe vom Regal, in dem die gewaschenen Instrumente nach dem Reinigungs- und Desinfektionsvorgang zwischengelagert werden.
2. Das Personal scannt mit einem Handscanner den auf dem Siebkorb befindlichen Code.
3. Der Scanner gibt die Information an den Rechenprozessor weiter.
4. Der Rechenprozessor wandelt mithilfe einer speziell für diesen Fall programmierten Software die Information so um, dass sie von der vorhandenen Instrumentenmanagementsoftware erkannt wird.
5. Die Instrumentenmanagementsoftware ruft nach dem Scannen des Siebkorbs die dafür vorgesehene Packliste auf.
6. Zeitgleich wird ein Bild des fertig gepackten Sets auf die Tischfläche projiziert.
7. Ein Operationsinstrument wird aus dem unsortierten Siebkorb entnommen.
8. Der Code, der auf dem Instrument aufgebracht ist, wird mit Hilfe des Kamerasensors gescannt. Aufgrund der eindeutigen Zuordenbarkeit erkennt das System, um welches Instrument es sich genau handelt.
9. Die Software des Kamerasystems gibt diese Information an den Rechenprozessor weiter.
10. Der Rechenprozessor wandelt mithilfe einer speziell für diesen Fall programmierten Software die Information so um, dass sie von der vorhandenen Instrumentenmanagementsoftware erkannt wird.
11. Der Rechenprozessor ruft das Bild auf, welches dem QR-Code des Instruments hinterlegt ist, und projiziert diese Pack- bzw. Wartungsanweisung für dieses Instrument mit Hilfe des Ultrakurzdistanzprojektors auf die Tischfläche.
12. Parallel wird das Instrument von der Instrumentenmanagementsoftware als "gepackt" abgehakt und vom Personal in den Siebkorb gelegt. (Beim "Packen nach Gruppen" wird das Instrument auf den dafür vorgesehenen Platz auf der Tischfläche gelegt. Der Ablageplatz wird vom Projektor genau angezeigt.)
13. Sind alle Instrumente auf der Packliste in der Instrumentenmanagementsoftware abgehakt, bekommt der Mitarbeiter oder die Mitarbeiterin über eine Projektion den Hinweis, dass der Siebkorb fertig gepackt ist. (Beim "Packen nach Gruppen" wird durch eine Projektion hingewiesen, dass die Gruppe fertig vorsortiert ist und ins Sieb abgelegt werden kann.)

Eine mögliche Ausführungsform der Erfindung ist wie folgt. In der Mitte über der Arbeitsfläche ist ein Touch-Monitor angebracht. Hinter dem Monitor befindet sich der Aufbau des Kamerasystems zum Scannen der Operationsinstrumente. Oberhalb des Monitors ist eine dimmbare Arbeitsleuchte angebracht. In der Mitte hinten ist der Ultrakurzdistanzprojektor zu sehen. Dahinter befindet sich eine Trennwand aus lackiertem Blech, welche bei Bedarf auch durch eine Glasscheibe ersetzt, oder ganz weggelassen werden kann. Auf der rechten Seite ist eine Ablage zu sehen, auf der zum Beispiel ein Etikettendrucker gestellt werden kann. Diese Ablagefläche kann je nach Bedarf auf der linken oder rechten Seite des Tisches montiert werden. Die Ablage kann auch komplett weggelassen werden.

Unter der Tischfläche ist eine Schublade zu sehen, welche mit diversen Arbeitsutensilien bestückt werden kann.

Der Aufbau des Kamerasystems ist wie folgt: bestehend aus Montageblechen, dem Kamerasystem und der Ringleuchte. Unter der Ringleuchte ist der Erkennungsbereich des Sensors dargestellt.

### Kurzbeschreibung der Zeichnungen

In den Figuren werden folgende Bezugszeichen verwendet:
- 1: Werkerführungsanlage
- 2: visuelle Ausgabekomponente
- 3: Erfassungseinheit
- 4: Kommunikationsschnittstelle
- 5: Recheneinheit
- 6: Arbeitstischeinheit
- 6a: höhenverstellbarer Arbeitstisch
- 6b: auskragende Arbeitsfläche
- 6c: Bodenbereich
- 6d: vertikale oder horizontale Anordnungsmöglichkeit

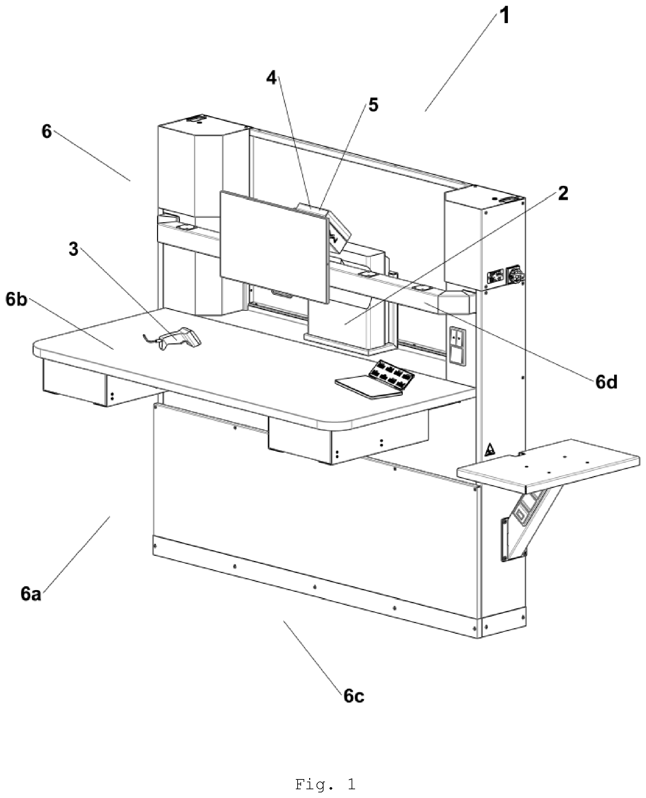

- Fig. 1: zeigt eine Werkerführungsanlage in Schrägansicht.

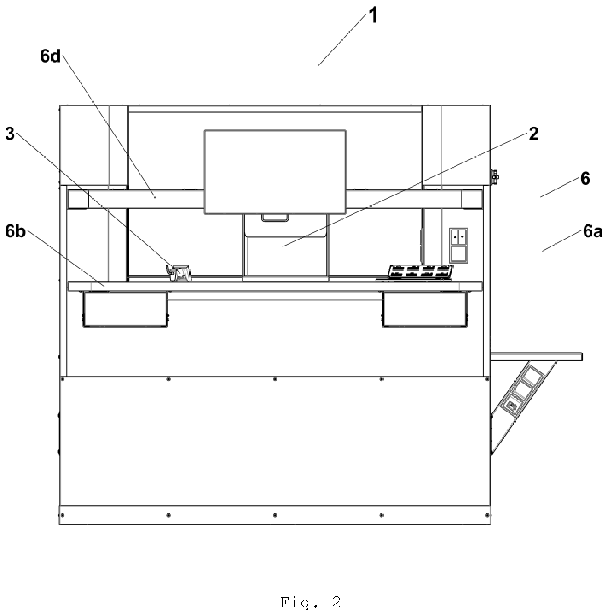

- Fig. 2: zeigt eine Werkerführungsanlagen in Frontansicht.

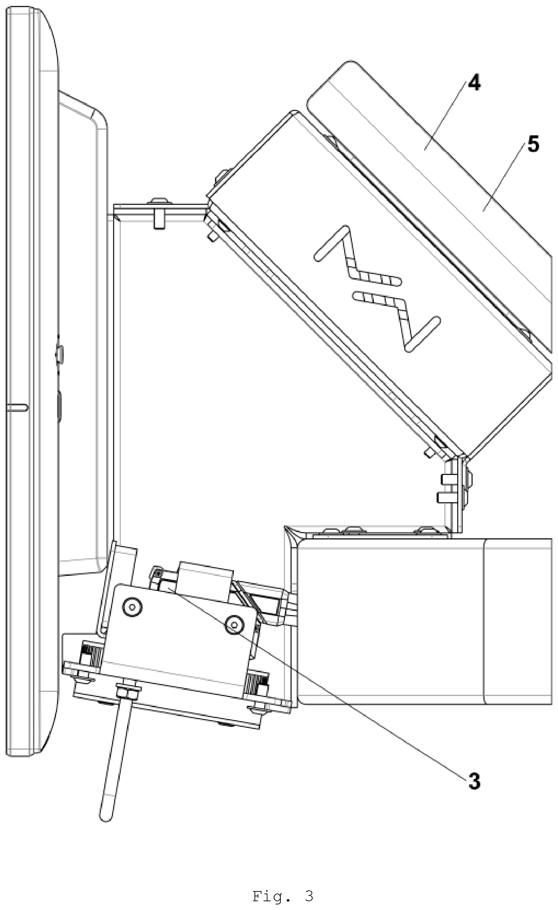

- Fig. 3: zeigt einen Aufbau eines Kamerasystems.

### BEISPIELE

### Beispiel 1: Werkerführungsanlage

Die Werkerführungsanlage 1 umfasst:
+ einen Projektor 2;
+ einen Kamerasensor 3;
+ Software;
+ eine Kommunikationsschnittstelle 4;
+ eine Recheneinheit 5; und
+ eine Arbeitstischeinheit 6 mit einer Arbeitsfläche 6b, die ausgebildet ist als Projektionsfläche.

### Beispiel 2: Verfahren zum Durchführen eines Arbeitsprozesses mit Werkerführung

Die Werkerführungsanlage 1 umfasst:
+ einen Projektor 2;
+ einen Kamerasensor 3;
+ Software;
+ eine Kommunikationsschnittstelle 4;
+ eine Recheneinheit 5; und
+ eine Arbeitstischeinheit 6 mit einer Arbeitsfläche 6b, die ausgebildet ist als Projektionsfläche.

Auf dieser Werkerführungsanlage 1 wird folgendes Verfahren ausgeführt:
Der Projektor 2 projiziert ein Bild auf die Arbeitsfläche 6b, wodurch der Werker angeleitet wird, die durch die Information dargestellte Aufgabe auszuführen. Der Werker führt diese Anweisung aus und legt das entsprechende Werkstück auf die Arbeitsfläche 6b. Der Kamerasensor 3 erfasst die Codes auf dem Werkstück. Die Software führt einen Prozess zur Zuordnung des erfassten Werkstücks aus. Sie vergleicht das Werkstück mit in Datenbanken hinterlegten Werkstücken. Die Kommunikation mit diesen Datenbanken erfolgt über die Kommunikationsschnittstelle 4. Die Daten werden durch die Recheneinheit 5 verarbeitet. Die neuen Informationen werden dann durch den Projektor 2 wieder auf die Arbeitsfläche 6b projiziert. So sieht der Werker, ob er korrekt gearbeitet hat. Dann wird das nächste Bild durch den Projektor 2 auf die Arbeitsfläche 6b projiziert, worauf das Verfahren von Neuem beginnt.

### Beispiel 3: Verfahren zum Befüllen eines Korbs mit sterilen Instrumenten für den Operationsbetrieb in einem Spital mit Werkerführung

Die Werkerführungsanlage 1 umfasst:
+ einen Projektor 2;
+ einen Handscanner und einen Kamerasensor 3;
+ Software;
+ eine Kommunikationsschnittstelle 4;
+ eine Recheneinheit 5; und
+ eine Arbeitstischeinheit 6 mit einer Arbeitsfläche 6b, die ausgebildet ist als Projektionsfläche.

Auf dieser Werkerführungsanlage 1 wird folgendes Verfahren ausgeführt:
Der Werker holt sich einen oder mehrere unsortierte bzw. chaotisch eingeordnete Siebkörbe von einem Regal, in dem die gewaschenen Instrumente nach dem Reinigungs- und Desinfektionsvorgang zwischengelagert werden. Der Werker scannt mit einem Handscanner 3 den auf dem Siebkorb befindlichen Code. Der Scanner 3 gibt die Information an die Recheneinheit 5 weiter. Die Recheneinheit 5 wandelt mithilfe einer speziell für diesen Fall programmierten Software die Information so um, dass sie von der vorhandenen Instrumentenmanagementsoftware erkannt wird. Die Instrumentenmanagementsoftware ruft nach dem Scannen des Siebkorbs die dafür vorgesehene Packliste auf. Zeitgleich wird ein Bild des fertig gepackten Sets auf die Arbeitsfläche 6b projiziert. Ein Operationsinstrument wird aus dem unsortierten Siebkorb entnommen. Der Code, der auf dem Instrument aufgebracht ist, wird mit Hilfe des Kamerasensors 3 gescannt. Aufgrund der eindeutigen Zuordenbarkeit erkennt das System, um welches Instrument es sich genau handelt. Die Software des Kamerasystems gibt diese Information an die Recheneinheit 5 weiter. Die Recheneinheit 5 wandelt mithilfe einer speziell für diesen Fall programmierten Software die Information so um, dass sie von der vorhandenen Instrumentenmanagementsoftware erkannt wird. Die Recheneinheit 5 ruft das Bild auf, welches dem QR-Code des Instruments hinterlegt ist, und projiziert diese Packanweisung für dieses Instrument mit Hilfe des Ultrakurzdistanzprojektors 2 auf die Arbeitsfläche 6b. Parallel wird das Instrument von der Instrumentenmanagementsoftware als "gepackt" abgehakt und vom Werker in den Siebkorb gelegt. Beim "Packen nach Gruppen" wird das Instrument auf den dafür vorgesehenen Platz auf der Arbeitsfläche 6b gelegt. Der Ablageplatz wird vom Projektor 2 genau angezeigt. Sind alle Instrumente in der Packliste der Instrumentenmanagementsoftware abgehakt, bekommt der Werker über eine Projektion den Hinweis, dass der Siebkorb fertig gepackt ist. Beim "Packen nach Gruppen" wird durch eine Projektion hingewiesen, dass die Gruppe fertig vorsortiert ist und ins Sieb abgelegt werden kann.

## Patentansprüche

1. Werkerführungsanlage (1) zur projektionsbasierten Werkerführung,
umfassend:
+ zumindest eine visuelle Ausgabekomponente (2);
+ zumindest eine Erfassungseinheit (3);
+ Software;
+ zumindest eine Kommunikationsschnittstelle (4); und
+ zumindest eine Recheneinheit (5),
**dadurch gekennzeichnet, dass**
+ die visuelle Ausgabekomponente (2) ausgebildet ist zur Darstellung von Bildern, grafischen Markierungen, Textinformationen, Videos und/oder Arbeitsanweisungen;
+ die Erfassungseinheit (3) eine Eingabekomponente ist, die ausgebildet ist zur Erfassung von optischen Codes, vorzugsweise QR-Codes, Datamatrix und/oder Barcode, von geometrischen Merkmalen von Objekten, Bildern und/oder Videos;
+ die Software ausgebildet ist zur Zuordnung erfasster Objekte zu gespeicherten Datensätzen, zur Generierung kontextabhängiger Inhalte zur Darstellung, zur Ablaufsteuerung des Arbeitsprozesses und/oder zur Datenerfassung, die über die Erfassungseinheit übermittelt werden;
+ die Kommunikationsschnittstelle (4) ausgebildet ist zur Kommunikation mit externen Datenbanken und anderen Informationsquellen, Management- oder Steuerungssystemen;
+ die Recheneinheit (5) ein Prozessor mit optionalem Datenspeicher ist, der ausgebildet ist für die Verarbeitung der von der Erfassungseinheit erfassten Daten, die Ansteuerung des Darstellungssystems, die Kommunikation mit externen IT-Systemen und/oder die Herstellung von zentralen oder dezentralen Datenmanagementstrukturen, gegebenenfalls betreffend Redundanz bzw. Ausfallsicherheit.

2. Werkerführungsanlage (1) nach Anspruch 1,
**dadurch gekennzeichnet, dass**
die visuelle Ausgabekomponente (2) ein Projektor ist.

3. Werkerführungsanlage (1) nach Anspruch 1 oder 2,
**dadurch gekennzeichnet, dass**
die Erfassungseinheit (3) ein RFID-Erkennungssystem, ein Handscanner, ein Kamerasensor, eine Fotokamera oder eine Videokamera ist.

4. Werkerführungsanlage (1) nach einem der Ansprüche 1, 2 oder 3,
**dadurch gekennzeichnet, dass**
die Kommunikationsschnittstelle (4) ausgebildet ist als Emulation eines Eingabegeräts.

5. Werkerführungsanlage (1) nach einem der vorangegangenen Ansprüche,
**dadurch gekennzeichnet, dass**
Werkerführungsanlage (1) eine Arbeitstischeinheit (6) umfasst, die einen höhenverstellbaren Arbeitstisch (6a) mit auskragender Arbeitsfläche (6b) umfasst, wobei
+ ein Bodenbereich (6c) unterhalb der Arbeitsfläche (6b) zur Gänze frei und ohne Tischbeine bzw. Abstützungen ist;
+ die Arbeitsfläche (6b) ausgebildet ist als Darstellung- bzw. Projektionsfläche;
+ eine vertikale oder horizontale Anordnungsmöglichkeit (6d) für Instrumente und/oder Werkzeuge in Form von Haken o.Ä. vorhanden ist;
+ gegebenenfalls Ablageelemente, eine Trennwand und/oder zumindest eine Schublade vorhanden sind.

6. Verfahren zum Durchführen eines Arbeitsprozesses mit Werkerführung,
**dadurch gekennzeichnet, dass**
auf einer Werkerführungsanlage (1),
umfassend:
+ zumindest eine visuelle Ausgabekomponente (2);
+ zumindest eine Erfassungseinheit (3);
+ Software;
+ zumindest eine Kommunikationsschnittstelle (4); und
+ zumindest eine Recheneinheit (5),
**dadurch gekennzeichnet, dass**
+ die visuelle Ausgabekomponente (2) ausgebildet ist zur Darstellung von Bildern, grafischen Markierungen, Textinformationen, Videos und/oder Arbeitsanweisungen;
+ die Erfassungseinheit (3) eine Eingabekomponente ist, die ausgebildet ist zur Erfassung von optischen Codes, vorzugsweise QR-Codes, Datamatrix und/oder Barcode, von geometrischen Merkmalen von Objekten, Bildern und/oder Videos;
+ die Software ausgebildet ist zur Zuordnung erfasster Objekte zu gespeicherten Datensätzen, zur Generierung kontextabhängiger Inhalte zur Darstellung, zur Ablaufsteuerung des Arbeitsprozesses und/oder zur Datenerfassung, die über die Erfassungseinheit übermittelt werden;
+ die Kommunikationsschnittstelle (4) ausgebildet ist zur Kommunikation mit externen Datenbanken und anderen Informationsquellen, Management- oder Steuerungssystemen;
+ die Recheneinheit (5) ein Prozessor mit optionalem Datenspeicher ist, der ausgebildet ist für die Verarbeitung der von der Erfassungseinheit erfassten Daten, die Ansteuerung des Darstellungssystems, die Kommunikation mit externen IT-Systemen und/oder die Herstellung von zentralen oder dezentralen Datenmanagementstrukturen, gegebenenfalls betreffend Redundanz bzw. Ausfallsicherheit;
folgende Schritte durchgeführt werden:
i) Darstellung von Informationen durch die visuelle Ausgabekomponente (2), wodurch der Werker angeleitet wird, die durch die Information dargestellte Aufgabe auszuführen;
ii) Erfassen von Codes durch die Erfassungseinheit (3);
iii) Ausführen der Software zur Zuordnung erfasster Objekte zu gespeicherten Datensätzen;
iv) Kommunikation mit externen Datenbanken durch die Kommunikationsschnittstelle (4);
v) Verarbeiten der Daten durch die Recheneinheit (5);
vi) Darstellung von neuen Informationen durch die visuelle Ausgabekomponente (2), wodurch der Werker angeleitet wird, die Aufgabe auszuführen.

7. Verfahren nach Anspruch 6,
**dadurch gekennzeichnet, dass**
die visuelle Ausgabekomponente (2) ein Projektor ist.

8. Verfahren nach Anspruch 6 oder 7,
**dadurch gekennzeichnet, dass**
die Erfassungseinheit (3) ein RFID-Erkennungssystem, ein Handscanner, ein Kamerasensor, eine Fotokamera oder eine Videokamera ist.

9. Verfahren nach einem der Ansprüche 6, 7 oder 8,
**dadurch gekennzeichnet, dass**
die Kommunikationsschnittstelle (4) ausgebildet ist als Emulation eines Eingabegeräts.

10. Verfahren nach einem der Ansprüche 6 bis 9,
**dadurch gekennzeichnet, dass**
die Werkerführungsanlage (1) eine Arbeitstischeinheit (6) umfasst, die einen höhenverstellbaren Arbeitstisch (6a) mit auskragender Arbeitsfläche (6b) umfasst, wobei
+ ein Bodenbereich (6c) unterhalb der Arbeitsfläche (6b) zur Gänze frei und ohne Tischbeine bzw. Abstützungen ist;
+ die Arbeitsfläche (6b) ausgebildet ist als Darstellung- bzw. Projektionsfläche;
+ eine vertikale oder horizontale Anordnungsmöglichkeit (6d) für Instrumente und/oder Werkzeuge in Form von Haken o.Ä. vorhanden ist;
+ gegebenenfalls Ablageelemente, eine Trennwand und/oder zumindest eine Schublade vorhanden sind.
